# EUROPEAN PATENT SPECIFICATION

(11) **EP 3 699 973 B1**
(45) Date of publication and mention of the grant of the patent: **12.02.2025**
(21) Application number: 18868304.9
(22) Date of filing: 10.10.2018
(51) Int. Cl.: H01M 50/124, H01M 50/133, H01M 50/15, H01M 50/55, H01M 50/588, H01M 50/593, H01M 10/04, H01M 50/119, H01M 50/578, H01M 50/159, H01M 50/169, H01M 50/557

(54) **BATTERY, ELECTRONIC DEVICE, AND METHOD FOR PACKAGING BATTERY**
BATTERIE, ELEKTRONISCHE VORRICHTUNG UND VERFAHREN ZUM VERPACKEN EINER BATTERIE
BATTERIE, DISPOSITIF ÉLECTRONIQUE ET PROCÉDÉ D'EMBALLAGE DE BATTERIE

(30) Priority: 20.10.2017 CN 201710985099
(43) Date of publication of application: 26.08.2020
(73) Proprietor: Xi'an Zhongxing New Software Co., Ltd., Xi'an, Shaanxi 710114 (CN)
(72) Inventor: ZHANG, Liqun, Xi'an Shaanxi 710114 (CN); GUO, Yongfeng, Xi'an Shaanxi 710114 (CN)
(74) Representative: Savi, Massimiliano
(86) International application number: PCT/CN2018/109727
(87) International publication number: WO 2019/076223

(56) References cited:
- EP-B1- 2 802 025
- CN-U- 203 760 523
- CN-U- 203 760 564
- CN-U- 204 144 329
- US-A1- 2010 092 861
- US-A1- 2013 288 104
- US-A1- 2015 037 664
- US-A1- 2016 072 154

## Description

### TECHNICAL FIELD

This application relates to but not limited to, the field of electronic device, in particular to an electric core, an electronic device including the electric core and a method for packaging an electric core.

### BACKGROUND

A mobile phone has become an essential electronic product in people's life. With a development of the mobile phone, an electric core of the mobile phone has also been subjected to several stages of development.

A first stage is an electric core with aluminum shell. The shell is shaped into a square by impact molding of aluminum material, and then a rolled core is added to form the electric core. The disadvantages lie in that, since the shell is shaped by impact molding of aluminum material, the size cannot be made large enough, especially in the length direction, due to the influence of aluminum deformation amount and material, which causes a limited size of the electric core and an insufficient capacity of the electric core.

A second stage is a soft-packed electric core, which is composed of an aluminum-plastic film and a rolled core. The aluminum-plastic film has a five-layer structure, and is mainly composed of aluminum foil. The aluminum foil forms the shell of the electric core through an aluminum bag formed by stamping, pressure heating, and the like and then a rolled core is added to form the electric core. The soft-packed electric core is mainly of rectangular structure, the advantages lie in that the electric capacity of the electric core may be made large enough, and the size may be made relatively large. The disadvantage lie in that the electric core is easy to cause the deformation of the outer aluminum-plastic film during the dropping process of the whole machine, which will cause the deformation of the inner rolled core and the failure of the electric core, and may cause safety accidents. Another disadvantage lies in that this kind of battery is usually pasted in the battery compartment through strong double-sided adhesive. If the battery is to be replaced, the removed battery is easy to deform during the disassembly process due to its softness, and the inner part of the electric core will also deform, resulting in potential safety hazards inside the electric core. So it cannot be reused, resulting in a lot of waste.

A third stage is a soft-packed special-shaped electric core, which is composed of an aluminum-plastic film and laminated positive and negative plates. The aluminum-plastic film has a five-layer structure, and is mainly composed of aluminum foil. The aluminum foil forms the shell of the electric core through an aluminum bag formed by stamping, pressure heating, and the like, and then laminated positive and negative plates are added to form the electric core. The electric core can be made into a step shape or one or several corners can be removed to adapt to the appearance design requirements of mobile phones or wearable devices, and also to meet the layout restrictions of electrical hardware. The advantages lie in that, the capacity of the electric core may be made large enough, the space of the appearance modeling of the device can be fully used, and the size may be made relatively large. The disadvantages lie in that, like the second kind of electric core, the electric core is easy to deform and fail when falling down in one aspect, and in another aspect, the battery is easy to deform when disassembled and cannot be reused.

How to change the problems of limited capacity and size of the electric core with aluminum shell, the failure of the soft-packed electric core upon falling down and the secondary use of the soft-packed battery are urgent problems that need to be solved.

CN 204144329U relates to a single battery comprising a package structure, a battery core and tabs. The package structure covers the outside of the battery core to directly package the battery core. The tabs are connected with the battery core, and is partially exposed to the outside of the package structure. The package structure comprises an upper housing and a lower housing. The upper and lower housings are combined with each other to form a closed space for accommodating the battery core. The material of the upper housing and the material of the lower housing are rigid materials. The battery core is formed by stacking the positive tab, a diaphragm and the negative tag.

CN 203760523U relates to a large-capacity Li-FeS₂ rigid package type special-shaped monomer battery, which comprises a monomer battery case and a monomer battery cap. The monomer battery case is of a special-shaped metal case body lacking one or two ring angles at one or two ends of the bottom surface, high-power special-shaped FeS₂ enveloped positive plates and special-shaped lithium-foil enveloped negative plates corresponding to guide lugs of the positive plates and the negative plates are arranged at intervals inside the special-shaped metal case body. All the guide lugs of the positive plates are fixedly arranged on a positive lead-out sheet. All the guide lugs of the negative plates are fixedly arranged on a negative lead-out sheet. The monomer battery cap is provided with a safety exhaust valve.

CN 203760564U relates to a large-capacity Li-FeS₂ rigid package type module battery pack. The module battery pack comprises a plurality of large-capacity Li-FeS₂ rigid package type monomer batteries. The monomer batteries are divided into a multiple number of groups. When the multiple number is higher than or equal to 2, two adjacent groups of corresponding monomer batteries are connected in series by conductors, the remained positive ends of the monomer batteries at two sides are connected in parallel by a conductor to form a whole, and the remained negative ends of the monomer batteries at the two sides are connected in parallel by a conductor to form a whole.

In US 2010/092861A, a battery pack including a bare cell, a metal case covering the outer surface of the bare cell, and a protection circuit board electrically connected to the metal case.

US 2016/072154A discloses a secondary battery pack including a battery cell having a cathode terminal and an anode terminal formed on one surface including a sealed portion to seal the battery cell and a protection circuit module (PCM) including a protection circuit board (PCB) having a protection circuit formed thereon, an external input and output terminal electrically connected to the protection circuit, a connector electrically connected to the external input and output terminal, and an electrically insulative PCM case in which the PCB is mounted, wherein the PCM is loaded on the sealed portion in a state in which the PCM is electrically connected to the battery cell and the connector is formed on the PCM such that the connector does not protrude outward from the secondary battery pack.

US 2015/037664A discloses a battery cell configured to have a structure in which an electrode assembly that can be charged and discharged is mounted in a plate-shaped battery case, a cathode terminal and an anode terminal protrude from one end of the battery case, the electrode terminals deviate to one side from a vertical central axis of a battery body when viewed from above, and a depressed portion is formed at one side of the battery body.

### SUMMARY

The present invention is an electric core according to independent claim 1 and a method for packaging an electric core according to independent claim 9. Preferred embodiments are as defined in the dependent claims.

Other features and advantages of this present invention will be set forth in a subsequent description, and will become apparent in part from the description, or will be understood by implementing this present application. The purpose and other advantages of this present application can be realized and obtained through the structure specially pointed out in the description, the claims and the accompanying drawings.

### BRIEF DESCRIPTION OF THE DRAWINGS

The accompanying drawings are used to provide an understanding of the technical solution of this application in some embodiments, and form a part of the description. Together with the embodiments of the application, the accompanying drawings are used to explain the technical solution of this application and do not constitute a limitation of the technical solution of this application.
Fig. 1 is a structural diagram of an electric core provided by an embodiment of this application;
Fig. 2 is a breakdown structural diagram of the electric core shown in Fig. 1;
Fig. 3 is an enlarged diagram of part A structure of Fig. 2;
Fig. 4 is a structural diagram of a laminated battery cell of the electric core shown in Fig. 1;
Fig. 5 is a sectional diagram of a partial structure of the electric core shown in Fig. 1;
Fig. 6 is a sectional diagram of a partial structure of the electric core shown in Fig. 1;
Fig. 7 is a sectional diagram of a partial structure of the electric core shown in Fig. 1;
Figs. 8a - 8l are schematic diagrams of the process of packaging the electric core.
herein, the relationship between the reference signs and the component names in Figs. 1-8l is as follows:
1 upper shell, 2 lower shell, 20 positive contact plate, 21 negative contact plate, 22 insulating film, 23 liquid injection hole, 24 installation through-hole, 3 laminated battery cell, 30 positive plate, 31 negative plate, 32 separator, 33 positive lug, 34 negative lug, 4 steel ball.

### DETAILED DESCRIPTION

In order to make the purpose, technical solution and advantages of this application clearer, embodiments of this application will be described in detail below with reference to the accompanying drawings.

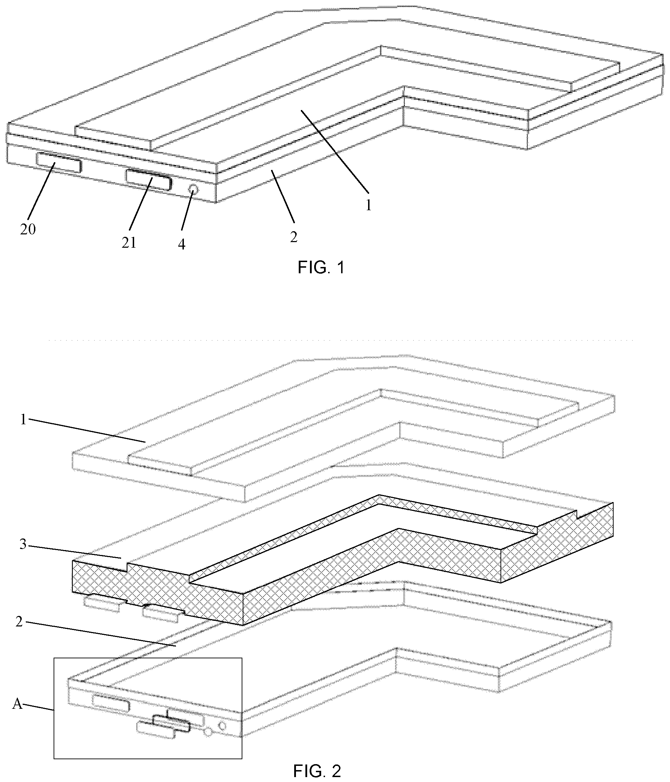

As shown in Fig. 1, this embodiment provides an electric core, including a shell and a battery cell.

As shown in Figure 2, the shell includes a steel lower shell 2 and a steel upper shell 1. Since the steel material has good rigidity and is easy to shape, the upper shell 1 and the lower shell 2 may be made into various sizes and shapes (such as special-shaped shapes). Thus the shell may be made into various shapes, so as to adapt to the design requirements of electronic devices such as mobile phones or wearable devices.

In addition, the lower shell 2 and the upper shell 1 may be connected by welding due to the weldability of the steel material to realize the sealing connection between the upper shell 1 and the lower shell 2, and form a sealed cavity between the upper shell 1 and the lower shell 2, so as to hermetically fix the battery cell in the sealed cavity of the shell.

In addition, as the shell is made of steel, the structure of the shell has good strength and is not easy to deform, and the electric core in the shell is further protected from deformation, so that the battery cell is safe and reliable to use, not easy to deform and fail, and can be reused after disassembled.

In some embodiments, the surfaces of the upper shell 1 and the lower shell 2 are provided with insulating layers, so that the shell is not conductive to avoid leakage.

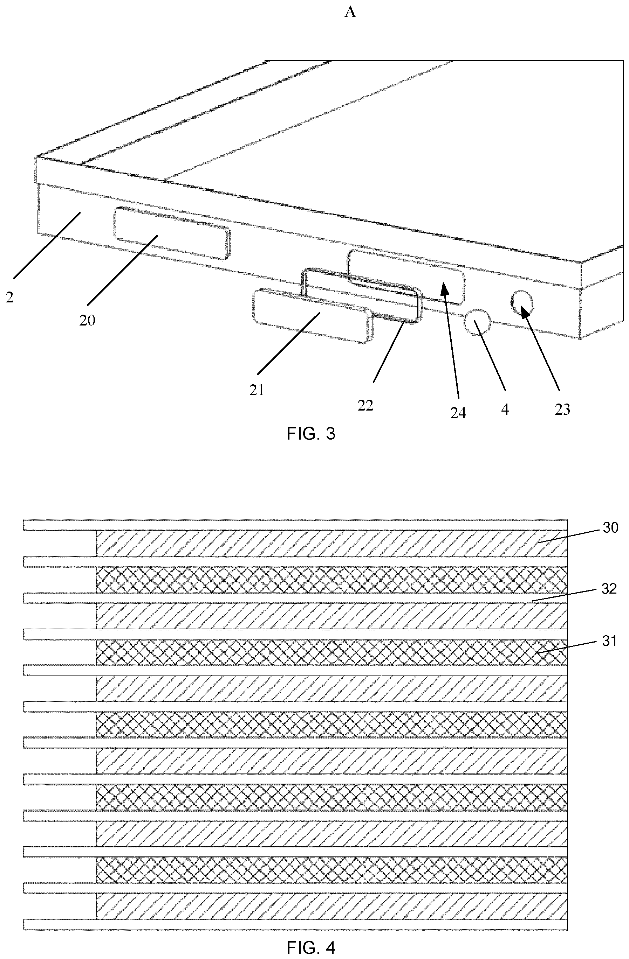

As shown in Fig. 4, the battery cell is a laminated battery cell 3, that is, the laminated battery cell 3 includes a laminated positive plate 30, a negative plate 31 and a separator 32. Herein, the separator 32 is arranged between the positive plate 30 and the negative plate 31, the positive plate 30 is connected with the positive lug 33 by welding, and the negative plate 31 is connected with the negative lug 34 by welding. In some embodiments, the shell is provided with a positive contact plate 20 and a negative contact plate 21, the positive lug 33 of the laminated battery cell 3 is connected with the positive contact plate 20 of the shell, and the negative lug 34 of the laminated battery cell 3 is connected with the positive contact plate 20 of the shell.

In some embodiments, both the uppermost layer and the lowermost layer of the laminated battery cell 3 are separators 32, to prevent the positive plate 30 or the negative plate 31 from directly contacting the shell and to prevent the occurrence of leakage.

The laminated battery cell 3 is formed by laminating the positive plate 30, the negative plate 31 and the isolation plate, so that the laminated battery cell 3 may take on various shapes by making the positive plate 30, the negative plate 31 and the isolation plate of each layer into various shapes. The shell which may be made into various shapes is combined with the battery cell which may be made into various shapes, so that the electric core may take on various shapes and can better adapt to the design requirements of electronic devices such as mobile phones or wearable devices.

Since both the steel shell and the laminated battery cell 3 have good shaping characteristics, the shell may be shaped into a special-shaped shell with a special-shaped cross-section, and meanwhile the upper shell 1 and the lower shell 2 are also special-shaped. Correspondingly, the laminated battery cell 3 also has special-shaped shape, and adapts to the shape of the shell, so as to fix the laminated battery cell 3 in the shell.

In some embodiments, unlike the electric core with a shape of square generally, the special-shaped shell may have a bend, and the laminated battery cell 3 correspondingly has a bend. Alternatively, the shell has an outward convex groove, and the laminated battery cell 3 has a convex matching with the convex groove. Alternatively, the shell has an inward concave groove, and the laminated battery cell 3 has a concave matching with the concave groove. Alternatively, a corner of the shell has a cut edge, and a corner of the laminated battery cell 3 correspondingly also has a cut edge.

The outward convex groove of the shell may be a groove which protrudes outward at a position of the shell away from the electric core, and the inward concave groove of the shell may be a groove which protrudes towards the position of the shell close to the electric core.

As shown in Figs. 1 and 2, in this embodiment, an L-shaped special-shaped electric core with a missing angle and a convex plate is provided, that is to say, the installation space left for the battery in the electronic device is an L-shaped complex space with a missing angle and a convex plate. The previous battery cannot fully utilize these spaces, while the electric core of this embodiment may fully utilize these spaces, thereby greatly increasing the capacity of the electric core. Moreover, a lot of previous production process methods and materials used for protecting the electric core may be reduced in terms of the design of the whole machine.

The shell may be made relatively thin under the condition of meeting the strength requirements due to the good strength of steel materials. In some embodiments, the upper shell 1 and the lower shell 2 have a wall thickness of 0.07-0.15 mm, and are formed by stamping. The wall thickness is basically the same as the thickness of the aluminum-plastic film used for the soft-packed electric core, but the strength is much stronger than that of the aluminum-plastic film used for the soft-packed electric core, so that the electric core may not be easily deformed. In addition, making the shell thinner may save materials and reduce costs, and meanwhile, may help to reduce the volume occupied by the shell, which is convenient to make the laminated battery cell relatively larger to increase the capacity of the electric core.

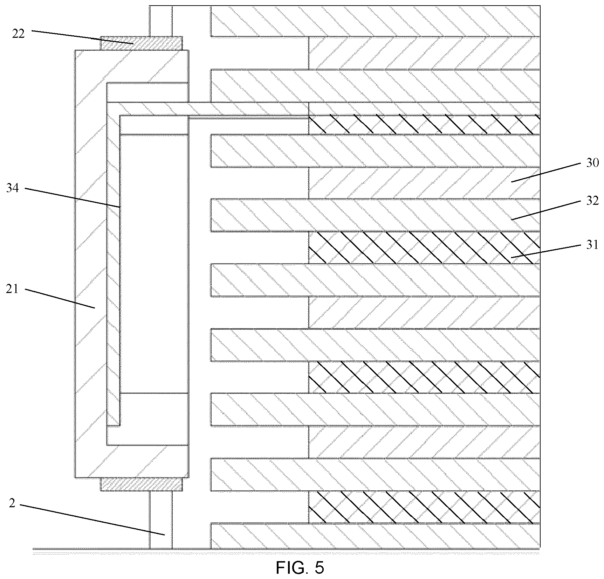

In some embodiments, as shown in Figs. 3 and 5, the lower shell 2 is provided with an installation through-hole 24. The negative contact plate 21 is embedded in the installation through-hole 24, and an insulating film 22 is arranged between the negative contact plate 21 and the lower shell 2 to insulate the negative contact plate 21 and the lower shell 2, so as to prevent the lower shell 2 from conducting electricity, and generating electric leakage, etc.. Then, the negative lug 34 is connected to the negative contact plate 21by welding.

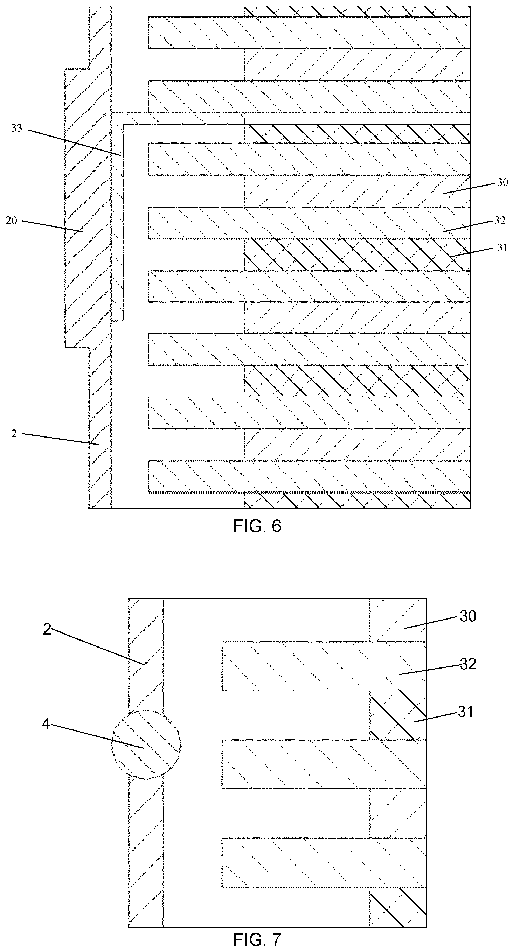

In some embodiments, as shown in Figs. 3 and 6, the lower shell 2 is provided with a convex protruding outward. The convex and the lower shell 2 are of an integrated structure. The convex may be used as the positive contact plate 20, and the positive lug 33 may be connected by welding to the lower shell 2 at a position of the convex.

Of course, the positive contact plate and the negative contact plate may also be in other forms. For example, the lower shell is provided with an installation through-hole, the positive contact plate is embedded in the installation through-hole, and an insulating film is arranged between the positive contact plate and the lower shell; the lower shell is provided with a convex with an integrated structure, and the convex is the negative contact plate. Alternatively, the lower shell is provided with two installation through-holes, and both the positive contact plate and the negative contact plate are embedded in the installation through-holes and insulating films are arranged between each of the contact plates and the lower shell. Alternatively, both the positive contact plate and the negative contact plate may be arranged on the upper shell. Alternatively, one of the positive contact plate and the negative contact plate may be arranged on the upper shell and the other one is arranged on the lower shell.

As the steel shell is not easy to deform, the positive contact plate 20 and the negative contact plate 21 arranged on the steel shell are not easy to deform, and may be used as the external contact points for connecting the electric core with an electronic device such as a mobile phone, so that the electric core may be used to supply power for the electronic device without secondary packaging process. Therefore, in order to remove the secondary packaging process of the electric core, a battery protection board is arranged on a control main board of the electronic device such as the mobile phone. In this way, the electric core may be directly delivered to a mobile phone assembly plant for mobile phone assembly after leaving the factory. It is no longer necessary to re-package the electric core, thereby greatly improving the production efficiency of the whole machine industry, reducing a complex battery packaging production process and saving production costs. The electric core of this embodiment has changed the production process of the whole battery industry and further influenced the relevant certification standards in the battery industry, which is an earth-shaking change.

In some embodiments, the shell is provided with a liquid injection hole 23 from which electrolyte may be injected into the shell.

In some embodiments, a pressure relief valve is arranged at the liquid injection hole 23. When the pressure in the shell is too large, the pressure relief valve may be opened to relieve the pressure, so as to prevent the shell from exploding due to excessive internal pressure and danger.

In some embodiments, in this embodiment, as shown in Fig. 7, the lower shell 2 is provided with a liquid injection hole 23, of course, the liquid injection hole 23 may also be arranged on the upper shell 1. The pressure relief valve is a steel ball 4 which is in interference fit with the liquid injection hole 23, herein the fit of the steel ball 4 can be tested to give an appropriate interference amount. The steel ball 4 is in sealing fit with the liquid injection hole 23, so that the ball 4 may seal the liquid injection hole 23. In addition, when the internal pressure of the shell is too large (such as due to the generation of gas), the pressure may push the steel ball 4 out and open the liquid injection hole 23, so that the internal gas or electrolyte may be discharged from the liquid injection hole 23 to prevent the shell from exploding due to excessive internal pressure and danger.

In conclusion, the biggest difference between the electric core of this embodiment and the existing electric core lies in that the steel shell is adopted to replace the former aluminum shell and aluminum-plastic film, and the steel material has the characteristics of good strength and weldability, so that the steel material may be used to manufacture the shell of the battery cell. The positive contact plate 20 and the negative contact plate 21 are directly added to the steel shell as external contact points for the connection of the electric core with the devices such as the mobile phone, and the battery protection board is arranged on the control main board of the electronic devices such as the mobile phone, so that the electric core may be used for mobile phone assembly without secondary packaging.

The shell of the electric core is made of steel sheet with a thickness of 0.07-0.15mm. The wall thickness of the shell is thin, and the strength is greatly enhanced compared with that of the soft-packed electric core. The shell will not be deformed and damaged due to the dropping of the whole machine, making the use of the electric core safe and reliable, and the electric core may be used for secondary use after disassembled, thereby saving costs.

The impact molding performance of the steel sheet is good, which make the size of the shell be not limited, so that the shell of the electric core may be made into the shape of removing corner edges or be made into a stepped shape. The laminated battery cell 3 may be made into a corresponding shape, so that the electric core may be special-shaped, which may meet the complex modeling requirements of the electronic device such as the mobile phone or wearable device, and make full use of the design space, to meet the requirements of increasing the capacity of the electric core and the strength of the electric core.

This embodiment provides an electronic device (not shown), including a device body provided with a battery compartment and an electric core described in embodiment 1, herein the electric core is installed in the battery compartment.

The electronic device of this embodiment includes the electric core described in embodiment 1, so it also has all beneficial effects of the electric core described in embodiment 1.

As the shell of the electric core is a steel shell with good strength, the electric core may be fixed in the battery compartment not only by bonding, but also by clamping. For example, a buckle and a buckling position may be provided respectively in the shell of the electric core and the battery compartment and the electric core is fixed in the battery compartment by buckling the buckle and the buckling position. The electric core fixed by clamping is convenient to disassemble and assemble, which is convenient to replace the electric core and recycle the electric core.

In some embodiments, the device body includes a control main board on which a battery protection board is welded, and the battery protection board is connected with the electric core.

As the electric core has a good strength in the whole, not easy to deform, and may be directly used for supplying power to electronic devices, the battery protection board is installed on the control main board instead of the electric core, in this way the electric core may be directly delivered to a mobile phone assembly plant for mobile phone assembly after leaving the factory, without secondary packaging of the electric core, which may greatly improve the production efficiency of the whole machine industry, reduce a complex battery packaging production process and save the production cost.

This embodiment provides a method for packaging an electric core. Herein the electric core includes a shell and a laminated battery cell, and the shell includes a steel lower shell and a steel upper shell. Surfaces of the upper shell and the lower shell are provided with insulating layers. The lower shell is provided with a positive contact plate and a negative contact plate, and the upper shell or the lower shell is provided with a liquid injection hole.

The method for packaging the electric core includes the following steps:
S1: packaging the laminated battery cell 3 into the lower shell 2;
S2: welding the positive lug 33 of the laminated battery with the positive contact plate 20 of the lower shell 2, and welding the negative lug 34 of the laminated battery with the negative contact plate 21 of the lower shell 2;
S3: buckling the upper shell 1 to the lower shell 2, and hermetically welding peripheries of the upper shell 1 and the lower shell 2;
S4: injecting electrolyte from a liquid injection hole 23;
S5: arranging a pressure relief valve at the liquid injection hole 23.

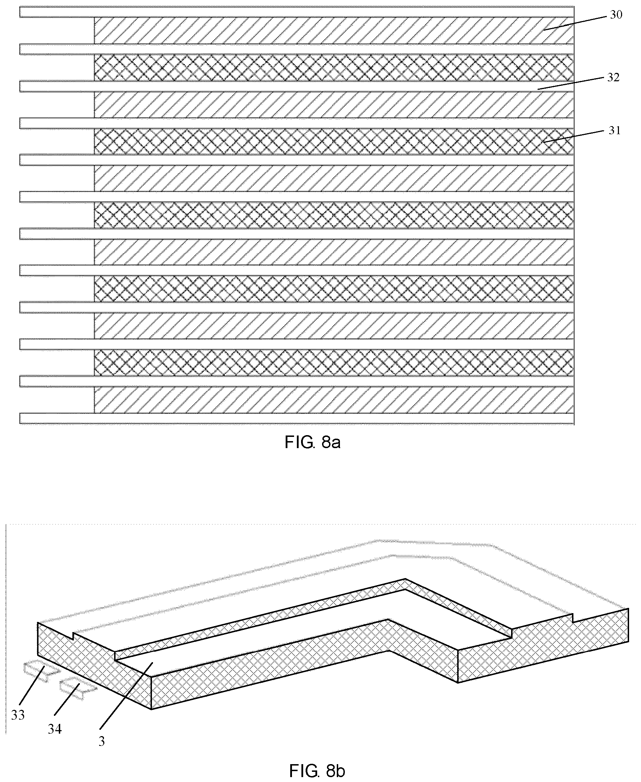

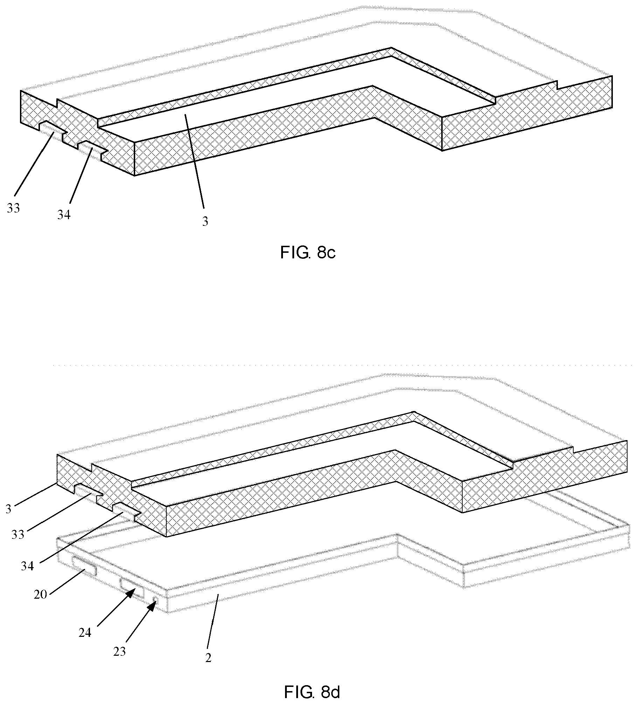

The assembly process of the laminated battery cell 3 is as follows: first, as shown in Fig. 8a, the positive plate 30, the negative plate 31 and the separator 32 are laminated layer by layer, herein the separator 32 is arranged between the positive plate 30 and the negative plate 31; then, as shown in Figs. 8b and 8c, the positive plate 30 is connected to the positive lug 33 by welding, and the negative plate 31 is connected to the negative lug 34 by welding.

In the packaging method of this embodiment, after the laminated battery cell 3 is assembled, the laminated battery cell 3 is placed into the lower shell 2, as shown in Fig. 8d.

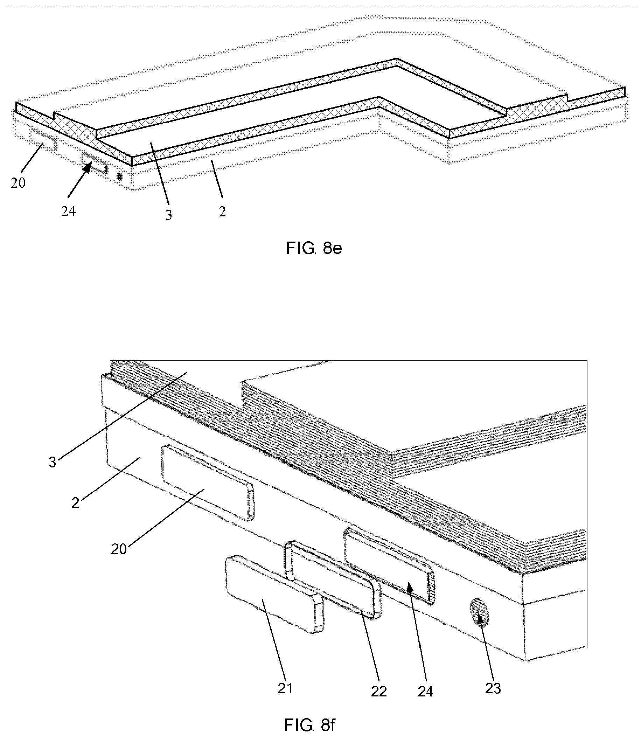

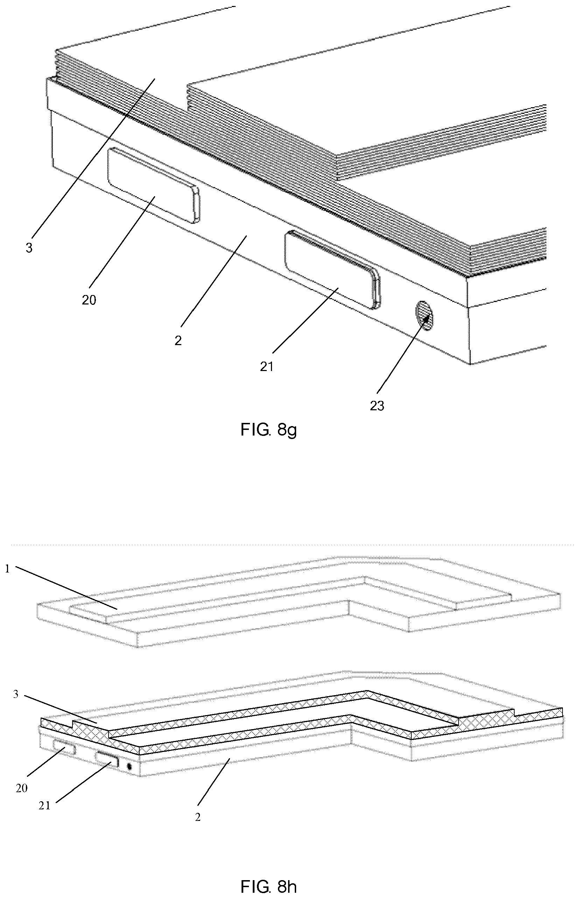

Then, the laminated battery cell 3 is connected to the positive contact plate 20 and the negative contact plate 21 by welding. First, the positive lug 33 is welded with the positive contact plate 20. Since the positive contact plate 20 is a convex which is integrated with the lower shell 2, the welding connection between the positive contact plate 20 and the positive lug 33 may be realized by welding the positive lug 33 with the lower shell 2 at the convex position, as shown in Fig. 8e. Then the negative lug 34 and the negative contact plate 21 are welded. As shown in Figs. 8f and 8g, the negative contact plate 21 and the insulating film 22 which is required to isolate and insulate the negative contact plate 21 and the lower shell 2 are embedded into an installation through-hole 24 of the lower shell 2, and then the negative contact plate 21 and the negative lug 34 are welded.

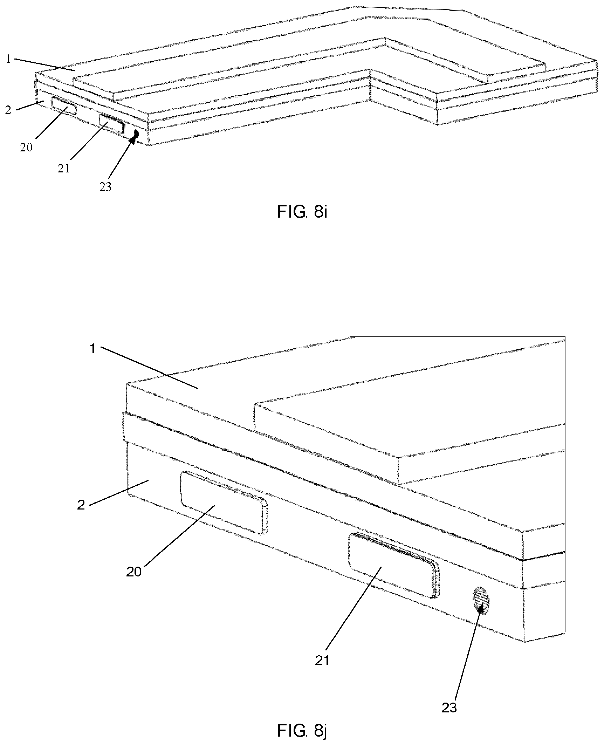

After the connection between the laminated battery cell 3 and the lower shell 2 is completed, as shown in Fig. 8h, the upper shell 1 is buckled to the lower shell 2, and then the periphery of the upper shell 1 are welded with the periphery of the lower shell 2, as shown in Fig. 8i, so that the connection between the upper shell 1 and the lower shell 2 is sealed.

Then, as shown in Fig. 8j, electrolyte is injected into the sealed shell at the liquid injection hole 23 of the lower shell 2;

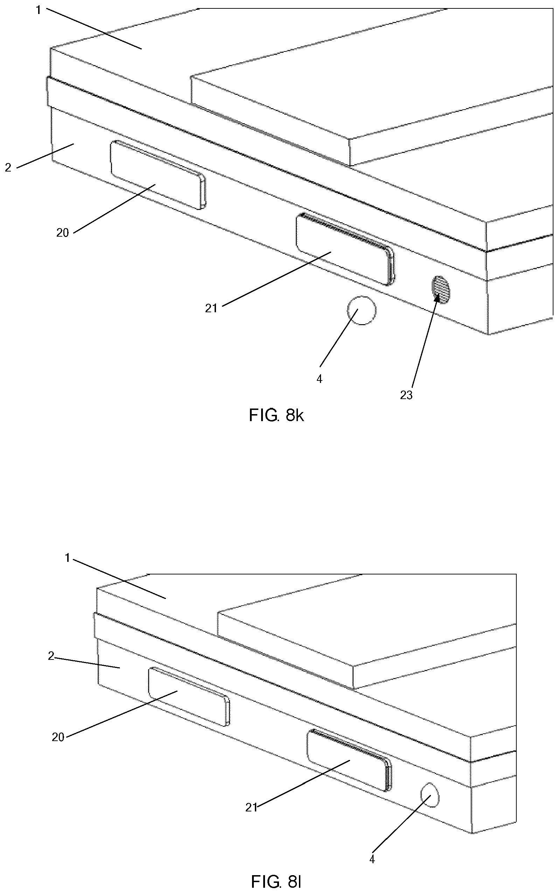

After the completion of electrolyte injection, as shown in Figs. 8k and 8l, a steel ball 4 is pressed into the liquid injection hole 23, and the steel ball 4 and the liquid injection hole 23 are in a state of interference fit. The liquid injection hole 23 may be sealed to prevent the electrolyte from flowing out of the liquid injection hole 23, and the packaging of the electric core is completed at this time.

It should be noted that in the description of this application, the terms "up", "down" and the like indicate the orientation or positional relationship based on the orientation or positional relationship shown in the drawings, only for convenience of describing this application and simplifying the description, rather than indicating or implying that the indicated apparatus or elements must have a specific orientation, be constructed and operated in a specific orientation, so it cannot be understood as limitations of this application.

## Claims

1. An electric core, comprising: a shell and a battery cell (3), **characterized in that**, the shell comprises a steel lower shell (2) and a steel upper shell (1), surfaces of the upper shell (1) and the lower shell (2) are provided with insulating layers, the lower shell (2) and the upper shell (1) are hermetically connected by welding to form a sealed cavity, and the shell is provided with a positive contact plate (20) and a negative contact plate (21);
wherein the lower shell (2) is provided with a convex protruding outward, the convex and the lower shell (2) are of an integrated structure, or the convex is embedded in an installation through-hole (24) of the lower shell (2) and an insulation film is arranged between the convex and the lower shell, and the convex is the positive contact plate (20) or the negative contact plate (21);
wherein the battery cell (3) is a laminated battery cell (3) fixed in the sealed cavity, and a positive lug (33) and a negative lug (34) of the laminated battery cell (3) are respectively connected with the positive contact plate (20) and the negative contact plate (21); and
wherein the laminated battery cell (3) is L-shaped with a missing angle and the shell has a cross section adapted to the shape of the laminated battery cell (3).

2. The electric core according to claim 1, wherein the shell has an outward convex groove or an inward concave groove, and the laminated battery cell (3) has a convex matching with the convex groove or a concave matching with the concave groove.

3. The electric core according to any of claims 1 to 2, wherein the upper shell (1) and the lower shell (2) have a wall thickness of 0.07mm-0.15mm.

4. The electric core according to any of claims 1 to 2, wherein the negative contact plate (21) is embedded in the installation through-hole (24), and an insulating film (22) is arranged between the negative contact plate (21) and the shell; or
the positive contact plate (20) is embedded in the installation through-hole (24), and an insulating film (22) is arranged between the positive contact plate (20) and the shell.

5. The electric core according to any of claims 1 to 2, wherein the shell is provided with a liquid injection hole where a pressure relief valve is arranged.

6. An electronic device, **characterized in that**, comprising: a device body provided with a battery compartment; and the electric core according to any of claims 1 to 5, wherein, the electric core is installed in the battery compartment.

7. The electronic device according to claim 6, wherein the shell of the electric core and the battery compartment are fixed by clamping; or
the shell of the electric core and the battery compartment are fixed by bonding.

8. The electronic device according to claim 6 or 7, wherein the device body comprises a control main board where a battery protection board is installed, and the battery protection board is connected with the electric core.

9. A method for packaging an electric core, **characterized in that**, the electric core comprises a shell and a laminated battery cell, the shell comprises a steel lower shell (2) and a steel upper shell (1), surfaces of the upper shell and the lower shell (2) are provided with insulating layers, the lower shell (2) is provided with a positive contact plate (20) and a negative contact plate (21), the upper shell (1) or the lower shell (2) is provided with a liquid injection hole (23),
the method for packaging the electric core comprises:
packaging (S1) the laminated battery cell (3) into the lower shell (2), wherein the laminated battery cell (3) is L-shaped with a missing angle, and the shell has a cross section adapted to the shape of the laminated battery cell (3);
welding (S2) a positive lug (33) of the laminated battery with the positive contact plate (20) of the lower shell (2), and welding (S2) a negative lug (34) of the laminated battery with the negative contact plate (21) of the lower shell (2), wherein the lower shell (2) is provided with a convex protruding outward, the convex and the lower shell (2) are of an integrated structure, or the convex is embedded in an installation through-hole (24) of the lower shell (2), and an insulation film is arranged between the convex and the lower shell, and the convex is the positive contact plate (20) or the negative contact plate (21);
buckling (S3) the upper shell (1) to the lower shell (2), and hermetically welding(S3) peripheries of the upper shell (1) and the lower shell (2);
injecting (S4) electrolyte from the liquid injection hole (23) of the upper shell (1) or the lower shell (2);
arranging (S5) a pressure relief valve at a position of the liquid injection hole (23).

## Patentansprüche

1. Elektrischer Kern, umfassend: eine Hülle und eine Batteriezelle (3), **dadurch gekennzeichnet, dass** die Hülle eine untere Stahlhülle (2) und eine obere Stahlhülle (1) umfasst, wobei die Oberflächen der oberen Hülle (1) und der unteren Hülle (2) mit Isolierschichten versehen sind, die untere Hülle (2) und die obere Hülle (1) durch Verschweißen hermetisch verbunden sind, um einen abgedichteten Hohlraum zu bilden, und die Hülle mit einer positiven Kontaktplatte (20) und einer negativen Kontaktplatte (21) versehen ist;
wobei die untere Hülle (2) mit einer nach außen vorstehenden konvexen Wölbung versehen ist, die konvexe Wölbung und die untere Hülle (2) eine integrierte Struktur aufweisen oder die konvexe Wölbung in ein Installationsdurchgangsloch (24) der unteren Hülle (2) eingebettet ist und eine Isolierfolie zwischen der konvexen Wölbung und der unteren Hülle angeordnet ist, und die konvexe Wölbung die positive Kontaktplatte (20) oder die negative Kontaktplatte (21) ist;
wobei die Batteriezelle (3) eine geschichtete Batteriezelle (3) ist, die in dem abgedichteten Hohlraum befestigt ist, und eine positive Lasche (33) und eine negative Lasche (34) der geschichteten Batteriezelle (3) jeweils mit der positiven Kontaktplatte (20) und der negativen Kontaktplatte (21) verbunden sind; und
wobei die geschichtete Batteriezelle (3) L-förmig mit einem fehlenden Winkel ist und die Hülle einen Querschnitt aufweist, der an die Form der geschichteten Batteriezelle (3) angepasst ist.

2. Elektrischer Kern nach Anspruch 1, wobei die Hülle eine nach außen konvexe Nut oder eine nach innen konkave Nut aufweist und die geschichtete Batteriezelle (3) eine konvexe Wölbung, die mit der konvexen Nut zusammenpasst, oder eine konkave Wölbung, die mit der konkaven Nut zusammenpasst, aufweist.

3. Elektrischer Kern nach einem der Ansprüche 1 bis 2, wobei die obere Hülle (1) und die untere Hülle (2) eine Wanddicke von 0,07 mm-0,15 mm aufweisen.

4. Elektrischer Kern nach einem der Ansprüche 1 bis 2, wobei die negative Kontaktplatte (21) in dem Installationsdurchgangsloch (24) eingebettet ist und eine Isolierfolie (22) zwischen der negativen Kontaktplatte (21) und der Hülle angeordnet ist; oder
die positive Kontaktplatte (20) in dem Installationsdurchgangsloch (24) eingebettet ist und eine Isolierfolie (22) zwischen der positiven Kontaktplatte (20) und der Hülle angeordnet ist.

5. Elektrischer Kern nach einem der Ansprüche 1 bis 2, wobei die Hülle mit einem Flüssigkeitseinspritzloch versehen ist, in dem ein Druckentlastungsventil angeordnet ist.

6. Elektronische Vorrichtung, **dadurch gekennzeichnet, dass** sie umfasst: einen Vorrichtungskörper, der mit einem Batteriefach versehen ist; und den elektrischen Kern nach einem der Ansprüche 1 bis 5, wobei der elektrische Kern in dem Batteriefach installiert ist.

7. Elektronische Vorrichtung nach Anspruch 6, wobei die Hülle des elektrischen Kerns und das Batteriefach durch Klemmen befestigt sind; oder
die Hülle des elektrischen Kerns und das Batteriefach durch Kleben befestigt sind.

8. Elektronische Vorrichtung nach Anspruch 6 oder 7, wobei der Vorrichtungskörper eine Steuerhauptplatine umfasst, auf der eine Batterieschutzplatine installiert ist, und die Batterieschutzplatine mit dem elektrischen Kern verbunden ist.

9. Verfahren zum Verpacken eines elektrischen Kerns, **dadurch gekennzeichnet, dass** der elektrische Kern eine Hülle und eine geschichtete Batteriezelle umfasst, die Hülle eine untere Stahlhülle (2) und eine obere Stahlhülle (1) umfasst, wobei die Oberflächen der oberen Hülle und der unteren Hülle (2) mit Isolierschichten versehen sind, die untere Hülle (2) mit einer positiven Kontaktplatte (20) und einer negativen Kontaktplatte (21) versehen ist, die obere Hülle (1) oder die untere Hülle (2) mit einem Flüssigkeitseinspritzloch (23) versehen ist,
wobei das Verfahren zum Verpacken des elektrischen Kerns umfasst:
Verpacken (S1) der geschichteten Batteriezelle (3) in der unteren Hülle (2), wobei die geschichtete Batteriezelle (3) L-förmig mit einem fehlenden Winkel ist, und die Hülle einen Querschnitt aufweist, der an die Form der geschichteten Batteriezelle (3) angepasst ist;
Verschweißen (S2) einer positiven Lasche (33) der geschichteten Batterie mit der positiven Kontaktplatte (20) der unteren Hülle (2) und Verschweißen (S2) einer negativen Lasche (34) der geschichteten Batterie mit der negativen Kontaktplatte (21) der unteren Hülle (2), wobei die untere Hülle (2) mit einer nach außen vorstehenden konvexen Wölbung versehen ist, die konvexe Wölbung und die untere Hülle (2)
eine integrierte Struktur aufweisen oder die konvexe Wölbung in ein Installationsdurchgangsloch (24) der unteren Hülle (2) eingebettet ist und eine Isolierfolie zwischen der konvexen Wölbung und der unteren Hülle angeordnet ist, und die konvexe Wölbung die positive Kontaktplatte (20) oder die negative Kontaktplatte (21) ist;
Zusammenstecken (S3) der oberen Hülle (1) mit der unteren Hülle (2) und hermetisches Verschweißen (S3) der Ränder der oberen Hülle (1) und der unteren Hülle (2);
Einspritzen (S4) eines Elektrolyten aus dem Flüssigkeitseinspritzloch (23) der oberen Hülle (1) oder der unteren Hülle (2);
Anordnen (S5) eines Druckentlastungsventils an einer Position des Flüssigkeitseinspritzlochs (23).

## Revendications

1. Noyau électrique, comprenant : une coquille et une cellule de batterie (3), **caractérisé en ce que**, la coquille comprend une coquille inférieure en acier (2) et une coquille supérieure en acier (1), les surfaces de la coquille supérieure (1) et de la coquille inférieure (2) sont pourvues de couches isolantes, la coquille inférieure (2) et la coquille supérieure (1) sont reliées hermétiquement par soudage pour former une cavité étanche, et la coquille est pourvue d'une plaque de contact positif (20) et d'une plaque de contact négatif (21) ;
dans lequel la coquille inférieure (2) est pourvue d'une partie convexe en saillie vers l'extérieur, la partie convexe et la coquille inférieure (2) sont d'une structure intégrée, ou la partie convexe est intégrée dans un trou traversant d'installation (24) de la coquille inférieure (2) et un film isolant est disposé entre la partie convexe et la coquille inférieure, et la partie convexe est la plaque de contact positif (20) ou la plaque de contact négatif (21) ;
dans lequel la cellule de batterie (3) est une cellule de batterie laminée (3) fixée dans la cavité scellée, et une cosse positive (33) et une cosse négative (34) de la cellule de batterie laminée (3) sont respectivement reliées à la plaque de contact positif (20) et à la plaque de contact négatif (21) ; et
dans lequel la cellule de batterie laminée (3) est en forme de L avec un angle manquant et la coquille a une section transversale adaptée à la forme de la cellule de batterie laminée (3).

2. Noyau électrique selon la revendication 1, dans lequel la coquille a une rainure convexe vers l'extérieur ou une rainure concave vers l'intérieur, et la cellule de batterie laminée (3) a une partie convexe en correspondance avec la rainure convexe ou une partie concave en correspondance avec la rainure concave.

3. Noyau électrique selon l'une quelconque des revendications 1 à 2, dans lequel la coquille supérieure (1) et la coquille inférieure (2) ont une épaisseur de paroi comprise entre 0,07 mm et 0,15 mm.

4. Noyau électrique selon l'une quelconque des revendications 1 à 2, dans lequel la plaque de contact négatif (21) est intégrée dans le trou traversant d'installation (24), et un film isolant (22) est disposé entre la plaque de contact négatif (21) et la coquille ; ou
la plaque de contact positif (20) est intégrée dans le trou traversant d'installation (24), et un film isolant (22) est disposé entre la plaque de contact positif (20) et la coquille.

5. Noyau électrique selon l'une quelconque des revendications 1 à 2, dans lequel la coquille est pourvue d'un trou d'injection de liquide où une soupape de sûreté est disposée.

6. Dispositif électronique, **caractérisé en ce que**, comprenant : un corps de dispositif pourvu d'un compartiment de batterie ; et le noyau électrique selon l'une quelconque des revendications 1 à 5, dans lequel, le noyau électrique est installé dans le compartiment de batterie.

7. Dispositif électronique selon la revendication 6, dans lequel la coquille du noyau électrique et le compartiment de batterie sont fixés par serrage ; ou
la coquille du noyau électrique et le compartiment de batterie sont fixés par collage.

8. Dispositif électronique selon la revendication 6 ou 7, dans lequel le corps du dispositif comprend une carte principale de commande où une carte de protection de batterie est installée, et la carte de protection de batterie est reliée au noyau électrique.

9. Procédé de conditionnement d'un noyau électrique, **caractérisé en ce que**, le noyau électrique comprend une coquille et une cellule de batterie laminée, la coquille comprend une coquille inférieure en acier (2) et une coquille supérieure en acier (1), les surfaces de la coquille supérieure et de la coquille inférieure (2) sont pourvues de couches isolantes, la coquille inférieure (2) est pourvue d'une plaque de contact positif (20) et d'une plaque de contact négatif (21), la coquille supérieure (1) ou la coquille inférieure (2) est pourvue d'un trou d'injection de liquide (23),
le procédé de conditionnement du noyau électrique comprend :
conditionner (S1) la cellule de batterie laminée (3) dans la coquille inférieure (2), dans lequel la cellule de batterie laminée (3) est en forme de L avec un angle manquant, et la coquille a une section transversale adaptée à la forme de la cellule de batterie laminée (3) ;
souder (S2) une cosse positive (33) de la batterie laminée avec la plaque de contact positif (20) de la coquille inférieure (2), et souder (S2) une cosse négative (34) de la batterie laminée avec la plaque de contact négatif (21) de la coquille inférieure (2), dans lequel la coquille inférieure (2) est pourvue d'une partie convexe en saille vers l'extérieur, la partie convexe et la coquille inférieure (2)
sont d'une structure intégrée, ou la partie convexe est intégrée dans un trou traversant d'installation (24) de la coquille inférieure (2), et un film isolant est disposé entre la partie convexe et la coquille inférieure, et la partie convexe est la plaque de contact positif (20) ou la plaque de contact négatif (21) ;
attacher (S3) la coquille supérieure (1) sur la coquille inférieure (2), et souder hermétiquement(S3) des périphéries de la coquille supérieure (1) et de la coquille inférieure (2) ;
injecter (S4) de l'électrolyte à partir du trou d'injection de liquide (23) de la coquille supérieure (1) ou de la coquille inférieure (2) ;
disposer (S5) une soupape de sûreté à une position du trou d'injection de liquide (23).
